(19) Europäisches Patentamt

European Patent Office

Office européen des brevets

(11) **EP 0 818 357 B1**

(12) **EUROPEAN PATENT SPECIFICATION**

(45) Date of publication and mention
of the grant of the patent:
**29.09.2004 Bulletin 2004/40**

(51) Int Cl.⁷: $B60R\ 21/32$, $B60R\ 21/00$

(21) Application number: **97111487.1**

(22) Date of filing: **07.07.1997**

(54) **A system for controlling the activation of an air bag on board a motor vehicle**

System zur Steuerung der Aktivierung eines Airbag an Bord eines Kraftfahrzeuges

Système pour commander l'activation de sac gonflable à bord d'un véhicule

(84) Designated Contracting States:
**DE ES FR GB IT SE**

(30) Priority: **08.07.1996 IT TO960583**
**27.12.1996 IT TO961087**

(43) Date of publication of application:
**14.01.1998 Bulletin 1998/03**

(73) Proprietor: **FIAT AUTO S.p.A.**
**10135 Torino (IT)**

(72) Inventors:
• **Lucchetti, Fabrizio**
**10136 Torino (IT)**

• **Becchio, Enrico**
**10136 Torino (IT)**

(74) Representative: **Quinterno, Giuseppe et al**
**Jacobacci & Partners S.p.A.,**
**Corso Regio Parco, 27**
**10152 Torino (IT)**

(56) References cited:
**EP-A- 0 402 027** **WO-A-93/21043**
**WO-A-94/14638** **WO-A-94/22693**
**WO-A-96/19363** **DE-A- 4 005 598**
**DE-A- 4 112 579** **DE-A- 4 208 714**
**DE-A- 4 212 018** **DE-A- 19 610 833**

**Description**

The present invention relates to a system for controlling the activation of an air bag on board a motor vehicle, of the kind defined in the preamble of claim 1.

A system of this kind is disclosed in DE 40 05 598. In order to decide whether the air-bag is to be inflated, this prior air-bag control system is predisposed to check first whether the motor vehicle acceleration has exceeded a predetermined value and, in the affirmative case, to compare the actual values of the relative velocity and the relative displacement of.the seat occupant with a respective predetermined limit or threshold value.

In the plane relative velocity - relative displacement, the said threshold values correspond to one point.

Various sensor arrangements for detecting the relative position and the relative velocity of an occupant with respect to an air-bag are disclosed in WO-A-94/22693.

The object of the invention is to provide an improved system for controlling the activation of an air bag.

This object is achieved according to the invention with a control system the main characteristics of which are defined in Claim 1.

Further characteristics and advantages of the invention will become apparent from the following detailed description, given purely by way of non-limitative example, with reference to the attached drawings, in which:

Figure 1 is block diagram of a control system according to the invention;

Figure 2 is a diagram showing, in the $v_r$, $s_r$ plane, a limit curve above which the air bag must be activated;

Figure 3 is a diagram which shows a graphic representation of a mathematical model utilised in the control system according to the invention;

Figure 4 is a diagram which shows the variation of the energy-to-mass ratio E/m as a function of the relative displacement $s_r$ of the person occupying the position in the vehicle with which the air bag is associated;

Figure 5 is a. diagram in the $v_r$, $s_r$ plane utilised in the control system according to the invention;

Figure 6 is a diagram in the $v_r$, $s_r$ plane determined on the basis of a second mathematical model;

Figure 7 is a block diagram of a control system according to the invention;

Figure 8 is a diagram which shows the variation, in the $v_r$, $s_r$ plane, of a threshold curve above which the air bag must be activated;

Figure 9 is a block diagram of a variant embodiment of the control system according to the invention; and

Figures 10 to 13 are diagrams which illustrate in graphic form mathematical models utilised in the system according to Figure 9.

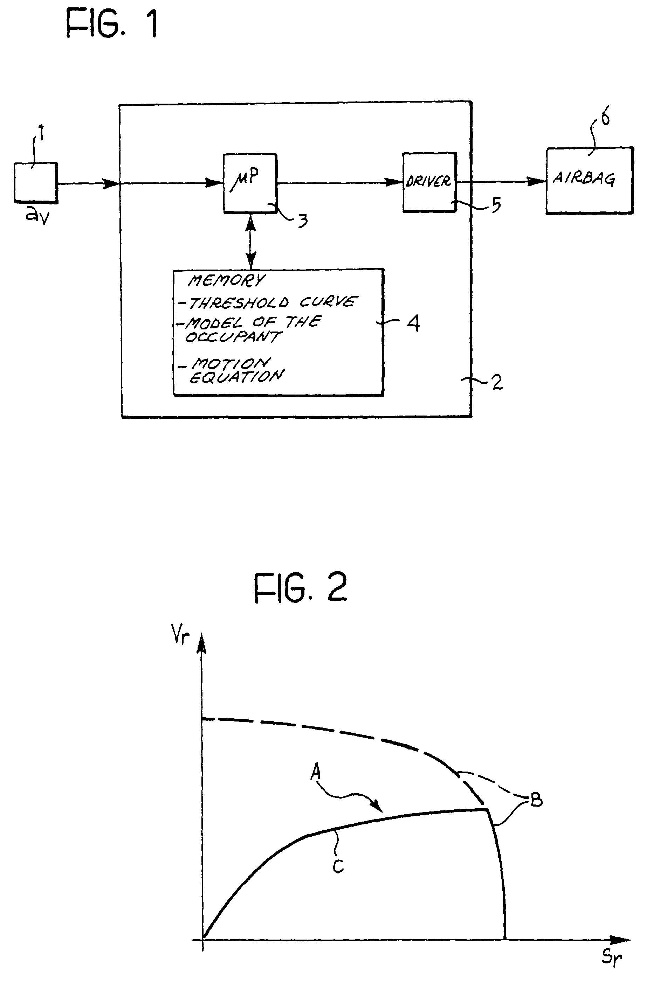

With reference to Figure 1, a system for controlling the activation of an air bag disposed in front of the seat of a motor vehicle includes an accelerometer 1 installed on board the motor vehicle itself. This accelerometer, of type known per se, provides in operation an electrical signal indicative of the acceleration of the motor vehicle.

The accelerometer 1 is connected to a control unit generally indicated 2, comprising a microprocessor 3, a memory 4 and a driver 5 for controlling inflation of the air bag. This latter is indicated 6 in Figure 1.

The memory 4 contains data, in mapped form, representative of a curve in the $v_r$, $s_r$ plane, $v_r$ being the relative velocity of the occupant in the position associated with the air bag and $s_r$ being the relative displacement of this occupant with respect to the vehicle.

The said curve is illustrated by the solid line in Figure 2 of the attached drawings, and is generally indicated A. It represents the threshold beyond which the air bag must be inflated. The curve A is predetermined as the intersection between a limit curve B partially illustrated in broken outline and partially in solid line in Figure 2, and a curve C.

The limit curve B is calculated on the basis of a predetermined linear mathematical model of the occupant of the seat with which the air bag is associated and the corresponding device (safety belt) for retaining the occupant in the seat as well as on the basis of an energy equilibrium condition as will be better explained hereinafter.

The curve C is derived on the basis of the said mathematical model of the occupant and of a predetermined mathematical model of deceleration of the vehicle during an impact against an obstacle.

The memory 4 further contains data which represents the said linear mathematical model of the occupant and of the associated retention system as a function $a_m = f(s_r)$ in which $a_m$ is the absolute acceleration of the occupant.

The mathematical model of the occupant and of the associated retention system is preliminarily determined by means of a simulation using a dummy mounted on a specimen of the model of motor vehicle in question and held in the seat with the safety belt.

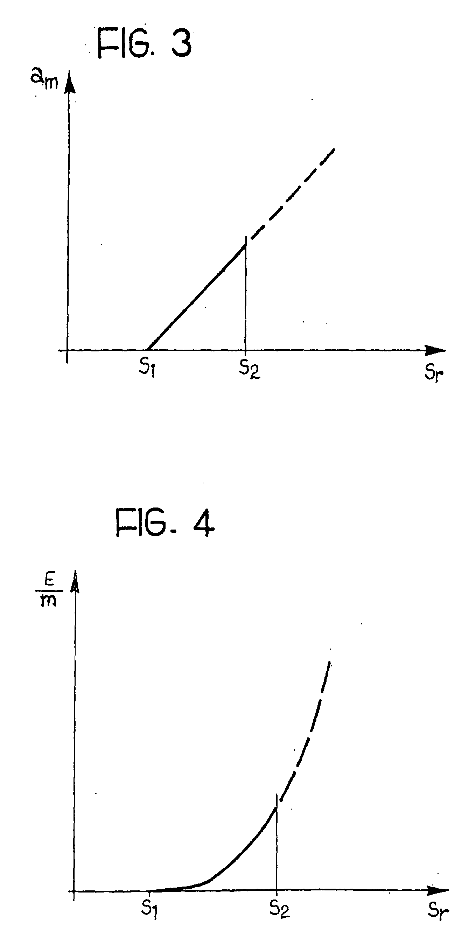

The "belted" dummy is considered as a mass plus spring mechanical system which can be represented as a linear mathematical model $a_m = f(s_r)$ with a behaviour of the type illustrated in the graph of Figure 3.

The expression of the acceleration $a_m$ is of the following type:

$a_m = 0$ for $s_r$ lying between 0 and a value $s_1$,

$a_m = k (s_r - s_1)$ for $s_r$ greater than $s_1$.

The function $a_m = f(s_r)$ is therefore identified by previous experimental determination of the values of k and $s_1$. These values can be derived, for a given model of motor vehicle, by installing on board the motor vehicle a dummy provided with a chest accelerometer operable to provide electrical signals indicative of the absolute acceleration $a_m$ of the dummy, the motor vehicle being provided with its own accelerometer to provide electrical signals indicative of the acceleration $a_v$ of the motor vehicle itself.

The data provided by these accelerometers allows determination of the relative displacement $s_r$ of the dummy with respect to the vehicle, by means of a double integration with respect to time:

$$s_r = \int \int (a_m - a_v) dt\, dt.$$

As stated above, the memory 4 stores data, derived experimentally in the manner indicated above, to represent the linear mathematical model $a_m = f(s_r)$.

After having derived the relative displacement $s_r$ according to the expression (1) the limit curve $v_r = f(s_r)$ beyond which it is imperative that the air bag be actuated is determined.

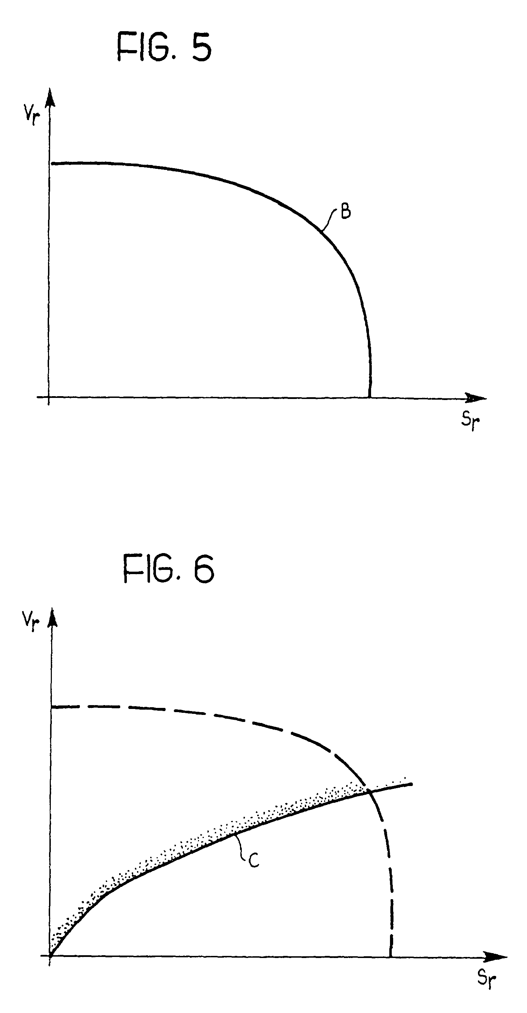

The calculation of this limit curve (curve B of Figures 2 and 5) is based on energy considerations.

The calculation of this curve starts from the characteristic $a_m = f(s_r)$ determined experimentally as described above.

By integrating $a_m$ as a function of the relative displacement $s_r$ the variation of the specific energy (E/m) of the dummy is obtained (m = mass of the dummy) which, as a function of $s_r$, has a quadratic behaviour as is shown in Figure 4.

The curves drawn in Figures 3 and 4 are shown as a broken line from a value $s_2$ of the relative displacement $s_r$, corresponding to the impact of the dummy (or rather of the physical person simulated by the dummy) against an obstacle in front of it in the motor vehicle such as the steering wheel or the instrument panel. For a given model of motor vehicle the value $s_2$ can easily be determined experimentally.

The area enclosed by the curve $a_m = f(s_r)$ of Figure 3 for values of $s_r$ lying between $s_1$ and $s_2$ indicates the energy of the dummy, or rather of the person, which can still be absorbed by the associated retention system (seat belt): having computed a general displacement $s_i$ (lying between $s_1$ and $s_2$) and having reached a corresponding relative velocity $v_{ri}$, if $v_{ri}^2$ is greater than $E/m(s_i)$ the dummy, or rather the physical person, will certainly strike against the obstacle in front of it.

Consequently, for the purpose of avoiding this impact, at each instant the relative displacement $s_r$ and the velocity $v_r$ of the dummy, or rather the person, must not exceed a limit curve which, on the basis of the E/m curve indicated above has a shape of the type shown in Figure 5.

The curve of Figure 5 relating to a given model of motor vehicle can easily be derived, following experimental determination of the values of $s_i$, $s_2$ and k as discussed above.

The curve B of Figure 5 represents the limit beyond which the air bag absolutely must intervene; beneath this curve the air bag may or may not be caused to intervene, on the basis of a supplementary criterion which will now be described.

It has been found that the change in deceleration $a_v$ of the motor vehicle in the case of an impact against an obstacle can be closely approximated by a function of the type

$$a_v = A (1 - \cos 2\pi t/d)/2 \tag{2}$$

in which t is time, d is the duration of the impact, and A is the maximum acceleration.

By varying the values of d and A in the above function (2) it is possible to simulate various types of impact.

Thus, assuming different values of d and A:

- the corresponding acceleration $a_v$ is calculated with function (2);
- for each calculated $a_v$ corresponding to a different type of simulated impact, the values of $v_r$ and $s_r$ of the dummy, or rather the person, at which the air bag must be activated are calculated;
- the thus-determined points $v_r$, $s_r$ are plotted in the graph of the limit curve B (Figure 5) determined above.

These points form a kind of "cloud" as is shown in Figure 6. Assuming now the curve which defines for example the lower margin of the cloud of points mentioned above as the limit curve C, as is shown in Figure 6.

The threshold curve A of intervention of the air bag (Figure 2) is then determined by intersecting the limit curves B and C as determined above.

The control unit 2 of the system according to Figure 1 is arranged to effect the following operations:

- acquire the acceleration $a_v$ of the motor vehicle from the accelerometer 1;
- calculate the vehicle's velocity $v_v = \int a_v dt$ and the vehicle's displacement $s_v = \int v_v dt$;
- numerically integrate a predetermined differential equation which represents the law of absolute motion of the occupant, in particular the equation

$$\ddot{x} + a_m \ (x - x_v) \ = \ 0 \hspace{4cm} (3)$$

in which
$\ddot{x}$ = absolute acceleration of the occupant,
$a_m$ = mathematical model of the occupant,
$x_v = s_v$ displacement of the motor vehicle,
to determine $\dot{x}$ and x (absolute velocity and displacement of the occupant) and then
$v_r = \dot{x} - v_v$ and $s_r = x - s_v$; and
- verify if the pair of values $v_r$, $s_r$ thus calculated define a point which lies above or below the threshold curve A stored in the memory 4 and cause activation "or not" of the air bag 6.

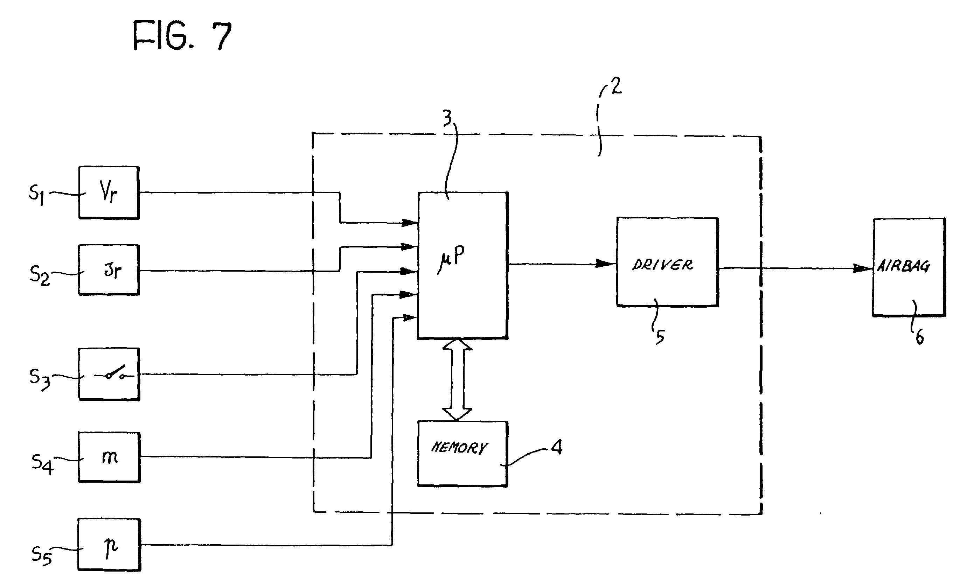

With reference to Figure 7, another system for controlling activation of an air bag disposed in front of a seat in a motor vehicle comprises sensors S1 and S2 operable to provide electrical signals or data indicative, respectively, of the relative velocity $v_r$ (with respect to the motor vehicle) and the relative displacement $s_r$ of the person who occupies the seat.

The sensors S1, S2 may for example be of ultrasonic or infrared ray type, or may be formed by means of artificial vision systems having means for electronic treatment of the signals to be stored.

The sensors S1, S2 are connected to a processing unit 3, for example a microprocessor, forming part of an electronic control unit generally indicated 2.

Also connected to the processor unit 3 is a sensor S3 operable to provide a two-state signal indicative of the state of the safety belt associated with the said seat, that is whether or not it is fastened.

A further sensor S4, of type known per se, provides the processor unit 3 with a signal indicative of the mass or weight m of the person who occupies the said seat.

If the position of the said seat relative to the air bag is adjustable then the system may conveniently include a further sensor S5 operable to provide the processor unit 1 with a signal indicative of the position of the seat selected by the user.

This sensor may be constituted, for example, by a position sensor of potentiometeric type.

The memory 4, preferably of non-volatile type, is associated with the processor unit 3, and stores data representative of a plurality of threshold curves each of which represents the threshold, in the $v_r$, $S_r$ plane, beyond which the air bag 6 must be activated. Each of these threshold curves corresponds to an associated value or range of values of the mass m of the person occupying the seat with which the air bag is associated.

For each value or range of values of the mass m in the memory 4 there are stored two threshold curves corresponding respectively to the fastened and unfastened state of the seat belt.

The control unit 2 further includes a driver 5 for controlling the inflation of the air bag 6. This driver, which is of type known per se, is controlled by the processor unit 3.

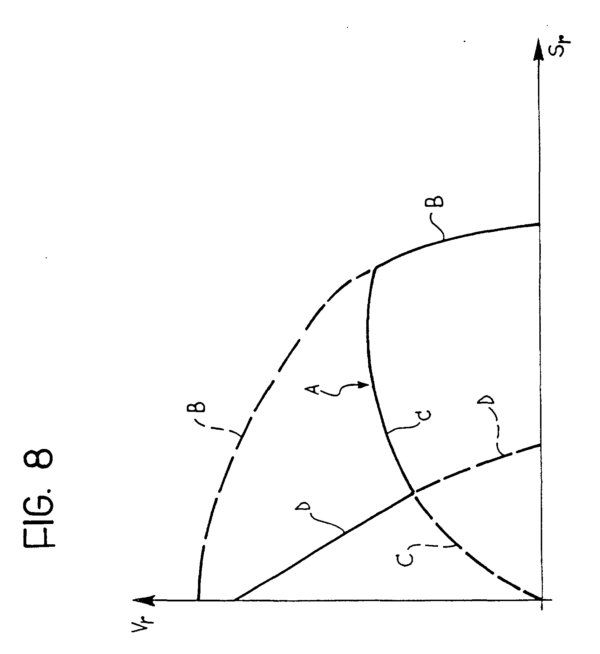

In Figure 8 there is illustrated a generic threshold curve A in the $v_r$, $s_r$ plane for the control system of Figure 7.

The curve A is preferably determined as the intersection between three limit curves B, C and D, illustrated partially as broken lines and partially in solid lines.

The limit curve B can be calculated, for example, on the basis of a linear mathematical model of the assembly comprising a person occupying the seat with which the air bag is associated and the corresponding retention means for retaining the occupant to the seat (seat belt) as well as on the basis of an energy equilibrium condition between the kinetic energy of the said person and the energy which can still be gradually absorbed by the retention means, for example as has already been described above with reference to Figure 5.

However, hereinafter there will be illustrated a further mathematical model of the assembly comprising the person plus retention means usable for this purpose.

The curve C is derived on the basis of the mathematical model of the person occupying the seat and the retention means, and a predetermined mathematical model of the deceleration of the vehicle during the course of an impact against an obstacle, and by then calculating for a plurality of simulated impacts the values of $v_r$ and $s_r$ for which it is necessary to activate the air bag, for example as has already been described with reference to Figure 6.

The curve D can be identified by calculating, on the basis of a differential equation which describes the motion of the person, the relative velocity $v_r$ (t=0) at the beginning of an impact such that in the time necessary for the activation and inflation of the air bag the person travels the distance which separates him or her from an obstacle in front of him/her, assuming that in the course of the impact the acceleration of the vehicle assumes a constant value, for example equal to 30g, predetermined as the maximum value which it is foreseen that this acceleration can assume for the motor vehicle in question.

A suitable differential equation for this purpose is presented hereinafter.

Naturally, other criteria different from those described here can be utilised to determine the threshold curves in the $v_r$, $s_r$ plane.

In each case the processor unit 3 of the system shown in Figure 7 is prearranged to acquire the signals provided by the sensors S1 to S5. On the basis of the signals provided by the sensors S3 to S5 the processor unit 3 selects from the memory 4 the threshold curve A corresponding to the detected mass of the person, in the alternative conditions of the seat belt being fastened or not, and on the position of use to which the seat has been adjusted.

In operation the processor unit 3 acquires, instant by instant from the sensors S1 and S2, the signals or data indicative of the relative velocity $v_r$ and relative displacement $s_r$ of the person, and acts to provide a signal to the driver 5 to determine activation of the air bag 6 when the acquired values of $v_r$ and $s_r$ correspond to a point in the $v_r$, $s_r$ plane situated above the selected threshold curve A.

The locus of the coordinate points $v_r$, $s_r$ which describe the relative velocity and relative displacement of the person during an impact form a curve in the $v_r$, $s_r$ plane which is indicative of the severity of the impact.

For determination of the instantaneous relative velocity $v_r$ and the instantaneous relative displacement $s_r$ of the person the system described above with reference to Figure 7 provides for the use of suitable sensors.

At present these sensors are, however, rather costly.

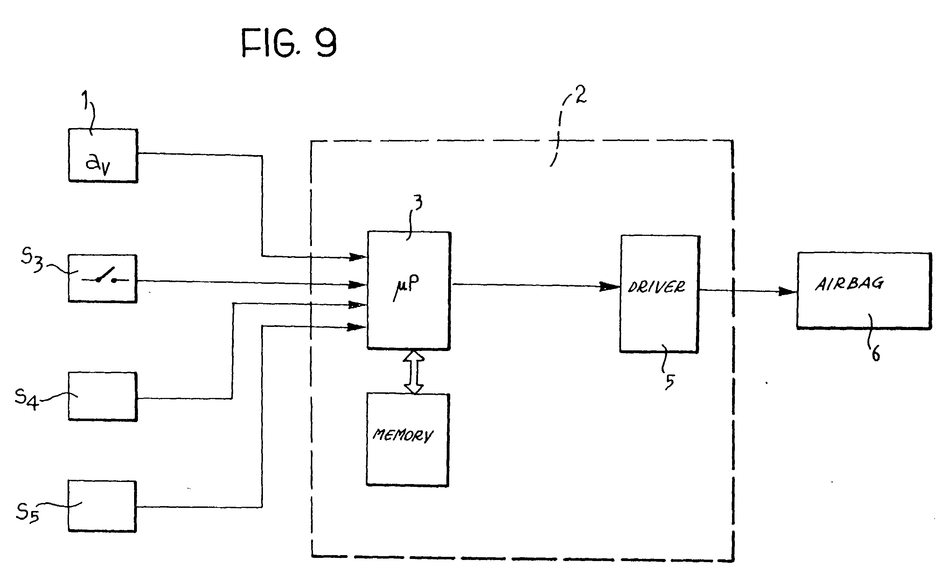

In view of this, as an alternative to the system according to Figure 7, the system which will now be described with reference to Figure 9 may be utilised. This system provides for the determination of $v_r$ and $s_r$ by way of calculation on the basis of predetermined mathematical models which describe the dynamic behaviour of the person and the associated retention system, as well as on the basis of a predetermined differential equation which describes the motion of such person.

In Figure 9 the same alphanumeric reference symbols have again been allocated to the devices already described above.

In the system according to Figure 9 the processor unit 3 is moreover connected to an accelerometer 1 operable to provide electrical signals indicative of the acceleration of the motor vehicle.

The processor unit 3 is arranged to integrate a differential equation which describes the motion of the person, in particular for example the following equation:

$$\ddot{x}(t) + \frac{C}{m} \cdot \dot{x}(t) + \frac{K}{m} x(t) = -a_v \qquad (4)$$

in which

 x(t) = $s_r$ is the relative displacement of the person with respect to the seat,
 t is time,
 $\dot{x}$(t) is the first derivative of x(t),
 $\ddot{x}$ (t) is the second derivative of x(t),
 m is the detected mass of the person occupying the seat,
 $a_v$ is the detected acceleration of the motor vehicle, and
 C and K are mathematical models of the person and the associated retention system (seat and seat belt, or just the seat if the seat belt is not fastened).

C and K can be determined experimentally by means of tests conducted with a dummy which simulates a real person.

In particular C and K can be expressed for example as linear functions of the relative displacement $s_r$ of the person and relative velocity $v_r$ of the person respectively.

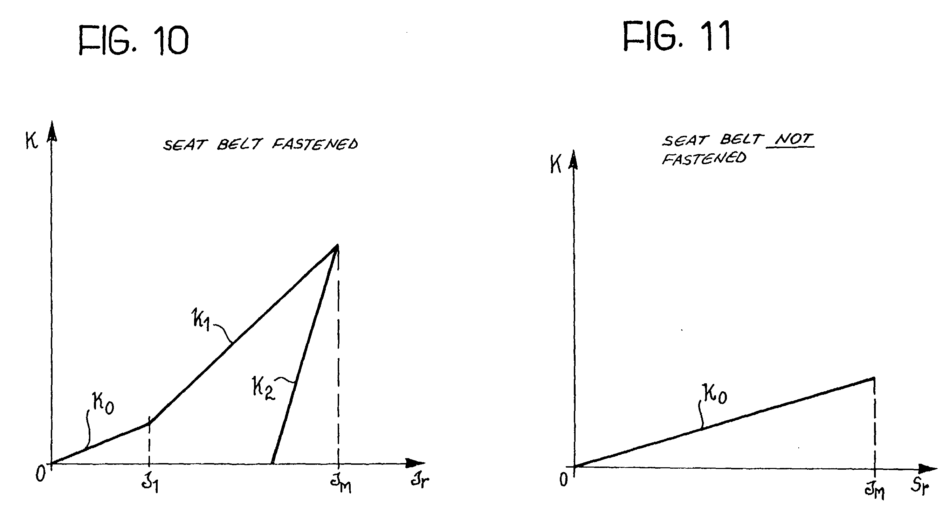

For the determination of $C(v_r)$ and $K(s_r)$ the person occupying the seat and the associated retention system are considered as a "mass+spring+damper" mechanical system the behaviour of which can be represented by means of linear functions of the relative velocity $v_r$ and the relative displacement $s_r$, for example according to the functions which will be described hereinafter with reference to Figures 10 to 13.

The representation of the person and the associated retention system by a mathematical model of the above-indicated type corresponds to the assumption that the absolute acceleration of the person has a function of the type

$$a_m = \frac{K}{m} + \frac{C}{m} \tag{5}$$

The function K($s_r$) conveniently has a different expression depending on whether or not the person has fastened the seat belt.

In particular, for a person who has fastened the seat belt the function K has, for example, an expression of the following type:

$$K = k_0 \cdot s_r \text{ for } s_r < s_1$$

$$K = k_1 \cdot s_r \text{ for } s_1 < s_r < s_M$$

$$K = k_2 \cdot s_r \text{ for } t > t_M \tag{6}$$

with $k_0$, $k_1$ and $k_2$ constant,

and in which $s_1$ is a value determined experimentally beforehand, $s_M$ is the maximum displacement, t is the time from the beginning of the impact and $t_M$ is the value of time corresponding to the maximum relative displacement of the person.

The function K as defined above is shown graphically in Figure 10.

The function K substantially corresponds to the deceleration of the person during the impact. As shown in Figure 10, the deceleration of the person is initially due in practice only to friction with the seat and this continues until the seat belt is tensioned ($s_r = s_l$). As soon as the seat belt is put under tension the deceleration of the person increases by the effect of the combined action of the friction with the seat and the retention action exerted by the seat belt. The deceleration reaches a maximum value at a relative displacement $s_M$ of the person and subsequently reduces with time by the effect of the resilient action exerted on the person by the seat belt.

For a person who has not fastened the seat belt the function K can assume, for example, the expression

$$K = k_0 \cdot s_r$$

for the whole range of $s_r$ which goes from zero to $s_M$. In this case the deceleration of the person is in effect due in practice only to the friction against the seat.

The function C($v_r$) for a person wearing a safety belt may for example have the following expression:

$$C = -c_0 \cdot v_r \text{ for } v_r < 0 \tag{7}$$

$$C = 0 \qquad \text{for } v_r > 0$$

in which $c_0$ represents a constant determined experimentally by means of a simulation with a dummy.

The function C substantially corresponds to the component of deceleration of the person due to damping of his motion caused by the retention system.

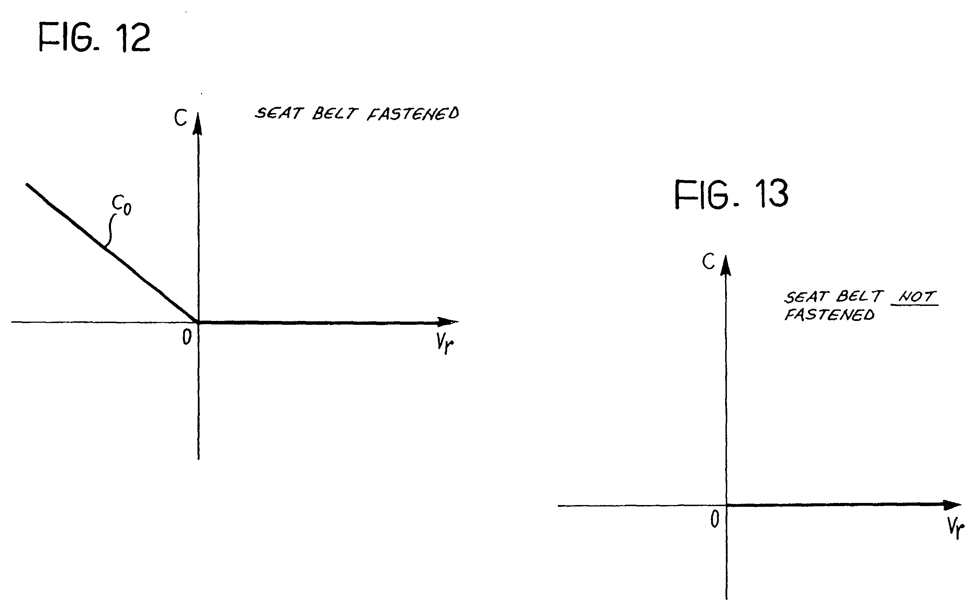

As is shown in Figure 13, in the case of a person with an unfastened seat belt the function C can be assumed to be constantly equal to zero.

In operation the system according to Figure 9 works in the following manner.

The processing unit 3 acquires data relating to acceleration $a_v$ of the vehicle, the mass m of the person occupying the seat facing the air bag and the signal indicating whether or not the seat belt is fastened.

On the basis of this latter information the processor unit 3 selects from the memory 4 the data relating to the corresponding functions K and C and then determines C/m and K/m.

On the basis of C/m, K/m and $a_v$ the processor unit 3 resolves the differential equation (4) and determines x (t) = $s_r$ and $\dot{x}(t) = v_r$.

The processor unit 3 then checks whether the calculated values of $v_r$ and $s_r$ represent a point in the $v_r$, $s_r$ plane which is above or below the threshold curve selected from the memory 4 on the basis of the data provided by the sensors S3 to S5 and - if this is the case - activates the air bag 6 via the driver 5.

For use in a motor vehicle in which two (or more) air bags are installed in front of the driver's and the front passenger's seat, the system can be arranged to compare the values of $v_r$ and $s_r$ (acquired by sensors or suitably calculated) with two (or more) different threshold curves, for example to take account of the fact that, in general, the distance between the person occupying the seat and the facing obstacle is different in the two cases.

**Claims**

1. A system for controlling the activation of an air bag (6) on board a motor vehicle, comprising means (1, 3, 4; S1, S2) for generating signals or data, operable to provide signals or data indicative of the relative velocity ($v_r$) and relative displacement ($s_r$) of the person occupying the seat facing the air bag (6),

    an electronic control unit (2) including processor means (3), a memory (4) and a driver device (5) for controlling inflation of the air bag (6);

    the said memory (4) containing data representative of a relative velocity threshold and a relative displacement threshold beyond which the air bag (6) must be inflated,

    the said processor means (3) being arranged to

    - acquire the said signals or data representative of the relative velocity ($v_r$) and relative displacement ($s_r$) of the said person; and
    - provide a signal for controlling the said driver device (5) to determine activation of the air bag (6) when the said relative velocity ($v_r$) and relative displacement ($s_r$) of the person with respect to the motor vehicle exceed the said thresholds;

    **characterised in that**

    the said memory (4) contains date representative, in the $v_r$, $s_r$ plane, $v_r$ and $s_r$ being the said relative velocity and relative displacement, of at least one threshold curve (A) which is formed of threshold points which vary as a function of both the said relative velocity ($v_r$) and the said relative displacement ($s_r$), and which represents the curve beyond which the air bag (6) must be inflated, and **in that**

    the said processor means (3) are arranged to determine the activation of the air bag (6) when the relative velocity ($v_r$) and the relative displacement ($s_r$) of said person with respect to the motor-vehicle correspond to a point in the $v_r$, $s_r$ plane situated above said threshold curve (A).

2. A system according to Claim 1, **characterised in that** it includes an accelerometer (1) operable to provide an electrical signal indicative of the acceleration ($a_v$) of the motor vehicle;

    the said memory (4) further containing data representing a first predetermined mathematical model of the said person and the associated system for retaining the person in the seat;

    the said processor means (3) being prearranged to

    - acquire the acceleration ($a_v$) of the motor vehicle from the signal emitted by the accelerometer (1);
    - calculate the velocity ($v_v$) and displacement ($s_v$) of the motor vehicle on the basis of the acceleration ($a_v$) of the motor vehicle;
    - integrate a predetermined differential equation which represents the law of absolute motion of the said person, to calculate the absolute velocity ($\dot{x}$) and displacement ($x$) of the said person;
    - calculate the relative velocity ($v_r$) and displacement ($s_r$) of the said person with respect to the motor vehicle; and
    - provide a signal to the said driver (5) to cause activation of the air bag (6) when the calculated values ($v_r$, $s_r$) of the relative velocity and displacement of the person with respect to the motor vehicle correspond to a point situated in the $v_r$, $s_r$ plane above the said limit curve (A).

3. A system according to Claim 2, **characterised in that** data are stored in the said memory (4) representative of a predetermined limit curve (A) the intersection between a first curve (B) calculated on the basis of the said first mathematical model and on the basis of the equilibrium between the kinetic energy of the said person and the energy which can be absorbed by the associated system for retaining the person to the seat, and a second curve (C) identified on the basis of the said first mathematical model and a second predetermined mathematical model which represents the deceleration of the vehicle as a function of time in the event of an impact, and calculating for a plurality of simulated impacts the values of $v_r$ and $s_r$ at which activation at the air bag (6) is necessary.

4. A system according to Claim 2 or Claim 3, **characterised in that** the said first mathematical model is represented by a linear function of the type

$$a_m = 0 \text{ for } s_r \text{ less than } s_1$$

and

$$a_m = k(s_r - s_1) \text{ for } s_r \text{ greater than } s_1$$

in which $a_m$ represents the absolute acceleration of the said person, $s_r$ is the relative displacement of the said person with respect to the vehicle, $s_1$ is a value of $s_r$ determined experimentally beforehand, and k is an experimentally determined constant.

5. A system according to Claim 4, **characterised in that** the said second mathematical model is represented by a function of the type

$$a_v = A (1\text{-cos } 2\pi t/d)/2 \tag{2}$$

in which $a_v$ represents the acceleration of the vehicle, t is time, A is the maximum acceleration of the vehicle, and d is the duration of the impact.

6. A system according to Claim 1, further including sensor means (S4) for detecting the mass (m) of the person occupying the said seat;

the said memory (4) containing data representative of a plurality of threshold curves (A) each of which represents, in the $v_r$, $s_r$ plane, the threshold beyond which the air bag (6) must be inflated, $v_r$ and $s_r$ being the relative velocity and displacement of the person occupying the said seat; each threshold curve (A) corresponding to an associated value or range of values of the mass (m) of the said person;

the processor means (3) being arranged to

select from the said memory (4) the threshold curve (A) which corresponds to the mass (m) of the person occupying the seat, and

provide a signal to the said driver device (5) to determine activation of the air bag (6) when the said data indicative of the relative velocity ($v_r$) and relative displacement ($s_r$) of the person with respect to the motor vehicle correspond to a point situated in the $v_r$, $s_r$ plane above the selected threshold curve (A).

7. A system according to Claim 6, **characterised in that** it further includes sensor means (S3) for detecting whether a seat belt associated with the seat is connected, **in that** the said memory (4) contains data representative of different threshold curves (A) for the fastened and unfastened condition of the said seat belt, and **in that** the processor means (3) are arranged to select from the said memory (4) the threshold curve (A) which corresponds to the mass (m) of the person occupying the seat and to whether or not the associated seat belt is fastened.

8. A system according to Claim 6 or Claim 7 for a motor vehicle in which the position of the said seat relative to the air bag (6) is adjustable,

**characterised in that** it further comprises

detector means (S5) connected to the said control unit (2), for detecting the position of the seat;

the control unit (2) being arranged to compare the relative velocity ($v_r$) and relative displacement ($s_r$) of the said person with a threshold curve (A) which is also selected on the basis of the relative position of the said seat.

9. A system according to any of Claims 6 to 8, in which the generator means which provide the signals or data indicative of the relative velocity and relative displacement of the person are velocity and position sensor devices (S1, S2) installed in the motor vehicle.

10. A system according to any of Claims 6 to 8, **characterised in that** it includes detector means (1) operable to provide signals or data indicative of the acceleration of the motor vehicle, and **in that** the means for generating signals or data indicative of the relative velocity of the person are constituted by the said control unit (2) which is prearranged to calculate the relative velocity and relative displacement of the person with respect to the motor vehicle on the basis of

- signals provided by the said acceleration detector means (1),
- mathematical models of the unit formed by the person and the associated system for retaining the person in the seat, the said mathematical models being stored in the said memory (4) and selectable according to the fastened or unfastened condition of the seat belt, and
- the solution, by the said processor means (3), of a predetermined differential equation which represents the motion of the person during an impact of the vehicle against an obstacle.

11. A system according to any of Claims 6 to 10, **characterised in that** for a given value or range of values of the mass (m) of the said person there are stored in the memory (4) data representative of a first limit curve (B) calculated on the basis of a first predetermined mathematical model of the unit formed by the person and the associated system for retention of the person to the seat, and on the basis of an equilibrium condition between the kinetic energy of the said person and the energy which can be absorbed by the said retention system.

12. A system according to Claim 11, **characterised in that** for a given value or range of values of the mass (m) of the person there are stored in the memory (4) data representative of a second limit curve (C) identified on the basis of the first mathematical model and a second predetermined mathematical model which represents the deceleration of the vehicle as a function of time in the case of an impact, and by calculating, for a plurality of simulated impacts, the values $v_r$ and $s_r$ for which activation of the air bag is necessary.

13. A system according to Claim 11 or Claim 12, **characterised in that** for a given value or range of values of the mass (m) of the said person data representative of a third limit curve (D) are stored in the memory (4), identified by calculating on the basis of the said differential equation the relative velocity ($v_r$) of the person at the beginning of an impact such that in the time necessary for activation and inflation of the air bag (6) the said person travels a predetermined maximum allowable distance assuming that in the course of the impact the acceleration ($a_v$) of the vehicle assumes a predetermined constant maximum value.

14. A system according to Claim 11 or Claim 12, **characterised in that** for each value or range of values of the mass (m) of the person the processor means (3) are arranged to assume as the threshold curve in the $v_r$, $s_r$ plane, the curve (A) comprising a portion of the said first limit curve (B) and a portion of the said second limit curve (C).

15. A system according to Claim 13 or Claim 14, **characterised in that** for each value or range of values of the mass (m) of the person the processor means (3) are arranged to assume a curve (A) further including a portion of the said third limit curve (D) as the threshold curve in the $v_r$, $s_r$ plane.

16. A system according to any of Claims 11 to 15, **characterised in that** the first mathematical model is represented by a linear function of the type

$$a_m = \frac{K}{m} + \frac{C}{m}$$

in which
$a_m$ is the absolute acceleration of the person,
m is the mass of the said person,
K is a predetermined function of $s_r$, and
C is a predetermined function of $v_r$.

17. A system according to Claim 16, **characterised in that** the function K has an expression of the type:

a) for a person with the seat belt fastened:

$$K = k_0 \cdot s_r \text{ for } s_r < s_1$$

$$K = k_1 \cdot s_r \text{ for } s_1 < s_r < s_M$$

$$K = k_2 \cdot s_r \text{ for } t > t_M \tag{3}$$

with $k_0$, $k_1$ and $k_2$ being constants,

$s_1$ being the value of $s_r$ determined experimentally in advance,

$s_M$ being the maximum relative displacement,

$t$ being the time from the beginning of an impact, and

$t_M$ being the time value corresponding to the maximum relative displacement $s_M$; and

b) for a person without the seat belt fastened:

$$K = k_0 \cdot s_r.$$

**18.** A system according to Claim 16 or Claim 17, **characterised in that** the function C has an expression of the type:

a) for a person with the seat belt fastened:

$$C = -c_0 \cdot v_r \text{ for } v_r < 0$$

$$C = 0 \qquad \text{for } v_r > 0,$$

and

b) for a person without the seat belt fastened:

$$C = 0$$

in which $c_0$ is an experimentally determined constant value.

**Patentansprüche**

**1.** System zur Steuerung der Auslösung eines Airbags (6) an Bord eines Kraftfahrzeugs, wobei das System enthält:

eine Einrichtung (1, 3, 4; S1, S2), um Signale oder Daten zu erzeugen, die in Betrieb steht, um Signale oder Daten zu liefern, die die relative Geschwindigkeit ($v_r$) und die relative Auslenkung ($s_r$) der Person angeben, die jenen Sitz einnimmt, der dem Airbag (6) gegenüber liegt,

eine elektronische Steuereinheit (2), die eine Prozessorstufe (3), einen Speicher (4) sowie eine Ansteuereinrichtung (5) aufweist, um das Aufblasen des Airbags (6) zu steuern;

wobei der Speicher (4) Daten enthält, die einen Schwellenwert der relativen Geschwindigkeit und einen Schwellenwert der relativen Auslenkung darstellen, oberhalb von denen der Airbag (6) aufgeblasen werden muss, wobei die Prozessorstufe (3) so ausgelegt ist, um

- jene Signale oder Daten zu gewinnen, die die relative Geschwindigkeit ($v_r$) und die relative Auslenkung ($s_r$) der Person darstellen; und

- ein Signal zu liefern, um die Ansteuereinrichtung (5) anzusteuern, um den Airbag (6) dann auszulösen, wenn die relative Geschwindigkeit ($v_r$) und die relative Auslenkung ($s_r$) der Person im Hinblick auf das Kraftfahrzeug die Schwellenwerte überschreiten;

**dadurch gekennzeichnet, dass**
der Speicher (4) Daten enthält, die in der $v_r$/$s_r$-Ebene, wobei $v_r$ und $s_r$ die relative Geschwindigkeit und die relative Auslenkung sind, zumindest eine Schwellwertkurve (A) darstellen, die von Schwellwertpunkten gebildet wird, die sich als Funktion sowohl der relativen Geschwindigkeit ($v_r$) als auch der relativen Auslenkung ($s_r$) ändern und die jene Kurve kennzeichnen, oberhalb der der Airbag (6) aufgeblasen werden muss, und dass

die Prozessorstufe (3) so aufgebaut ist, um die Auslösung des Airbags (6) zu bestimmen, wenn die relative Geschwindigkeit ($v_r$) und die relative Auslenkung ($s_r$) der Person im Hinblick auf das Kraftfahrzeug einem Punkt in der $v_r/s_r$-Ebene entsprechen, der oberhalb der Schwellwertkurve (A) liegt.

2. System gemäß Anspruch 1, **dadurch gekennzeichnet, dass** das System einen Beschleunigungsmesser (1) aufweist, der in Betrieb steht, um ein elektrisches Signal zu liefern, das die Beschleunigung ($a_v$) des Kraftfahrzeugs angibt;
   der Speicher (4) weiters Daten enthält, die ein erstes vorgegebenes mathematisches Modell der Person und des zugeordneten Systems darstellen, das die Person im Sitz zurückhält;
   die Prozessorstufe (3) so voreingerichtet ist, um

   - die Beschleunigung ($a_v$) des Kraftfahrzeugs von jenem Signal zu gewinnen, das der Beschleunigungsmesser (1) abgibt;
   - die Geschwindigkeit ($v_v$) und die Auslenkung ($s_v$) des Kraftfahrzeugs aufgrund der Beschleunigung ($a_v$) des Kraftfahrzeugs zu berechnen;
   - eine vorgegebene Differenzialgleichung zu integrieren, die das Gesetz der absoluten Bewegung der Person darstellt, um die absolute Geschwindigkeit (x) und die Auslenkung (x) der Person zu berechnen;
   - die relative Geschwindigkeit ($v_r$) und Auslenkung ($s_r$) der Person im Hinblick auf das Kraftfahrzeug zu berechnen; und
   - ein Signal für die Ansteuereinheit (5) zu liefern, um das Auslösen des Airbags (6) hervorzurufen, wenn die berechneten Werte ($v_r$, $s_r$) der relativen Geschwindigkeit und Auslenkung der Person im Hinblick auf das Kraftfahrzeug einem Punkt entsprechen, der in der $v_r/s_r$-Ebene oberhalb der Grenzkurve (A) liegt.

3. System gemäß Anspruch 2, **dadurch gekennzeichnet, dass** Daten im Speicher (4) gespeichert werden, die eine vorgegebene Grenzkurve (A) als Schnittpunkt zwischen einer ersten Kurve (B), die aufgrund des ersten mathematischen Modells sowie aufgrund des Gleichgewichts zwischen der kinetischen Energie der Person und jener Energie berechnet wird, die vom zugeordneten System, das zum Zurückhalten der Person in ihrem Sitz dient, aufgenommen werden kann, und einer zweiten Kurve (C) darstellen, die aufgrund des ersten mathematischen Modells und eines zweiten vorgegebenen mathematischen Modells bestimmt wird, das die Verlangsamung des Fahrzeugs als Funktion der Zeit im Falle eines Aufpralls darstellt, und für eine Vielzahl von simulierten Aufprallvorgängen die Werte von $v_r$ und $s_r$ berechnet, bei denen die Auslösung des Airbags (6) erforderlich ist.

4. System gemäß Anspruch 2 oder Anspruch 3, **dadurch gekennzeichnet, dass** das erste mathematische Modell durch eine lineare Funktion folgender Art dargestellt wird:

$$a_m = 0 \qquad \text{für } s_r \text{ kleiner als } s_1$$

und

$$a_m = k(s_r\text{-}s_1) \text{ für } s_r \text{ größer als } s_1$$

dabei ist $a_m$ die absolute Beschleunigung der Person, $s_r$ die relative Auslenkung der Person im Hinblick auf das Fahrzeug, $s_1$ ein Wert von $s_r$, der im Voraus experimentell bestimmt wird, und k eine experimentell bestimmte Konstante.

5. System gemäß Anspruch 4, **dadurch gekennzeichnet, dass** das zweite mathematische Modell durch eine Funktion folgender Art dargestellt wird:

$$a_v = A \ (1\text{-}\cos 2\pi t/d) \ /2 \qquad\qquad (2)$$

dabei ist $a_v$ die Beschleunigung des Fahrzeugs, t die Zeit, A die maximale Beschleunigung des Fahrzeugs und d die Dauer des Aufpralls.

6. System gemäß Anspruch 1, wobei das System weiters eine Sensoreinrichtung (S4) aufweist, um die Masse (m) jener Person abzutasten, die den Sitz einnimmt;

wobei der Speicher (4) Daten enthält, die eine Vielzahl von Schwellwertkurven (A) darstellen, von denen jede in der $v_r/s_r$-Ebene jenen Schwellenwert kennzeichnet, oberhalb dem der Airbag (6) aufgeblasen werden muss, wobei $v_r$ und $s_r$ die relative Geschwindigkeit und Auslenkung jener Person sind, die den Sitz einnimmt; wobei jede Schwellwertkurve (A) einem zugeordneten Wert oder Bereich von Werten der Masse (m) dieser Person entspricht;

wobei die Prozessorstufe (3) so ausgelegt ist, um

aus dem Speicher (4) jene Schwellwertkurve (A) auszuwählen, die der Masse (m) jener Person entspricht, die den Sitz einnimmt, und

ein Signal für die Ansteuereinrichtung (5) zu liefern, um den Airbag (6) auszulösen, wenn die Daten, die die relative Geschwindigkeit ($v_r$) und die relative Auslenkung ($s_r$) der Person im Hinblick auf das Kraftfahrzeug angeben, einem Punkt entsprechen, der in der $v_r/s_r$-Ebene oberhalb der ausgewählten Schwellwertkurve (A) liegt.

7. System gemäß Anspruch 6, **dadurch gekennzeichnet, dass** das System weiters eine Sensoreinrichtung (S3) aufweist, um abzutasten, ob ein Sitzgurt, der dem Sitz zugeordnet ist, angelegt ist, dass der Speicher (4) Daten enthält, die verschiedene Schwellwertkurven (A) für einen angelegten und einen nicht angelegten Zustand des Sitzgurts darstellen, und dass die Prozessorstufe (3) so ausgelegt ist, um aus dem Speicher (4) jene Schwellwertkurve (A) auszuwählen, die der Masse (m) jener Person, die den Sitz einnimmt, sowie dem Zustand entspricht, ob der Sitzgurt angelegt ist oder nicht.

8. System gemäß Anspruch 6 oder Anspruch 7 für ein Kraftfahrzeug, bei dem die Stellung des Sitzes relativ zum Airbag (6) eingestellt werden kann,
**dadurch gekennzeichnet, dass** das System weiters enthält:

   eine Detektoreinrichtung (S5), die mit der Steuereinheit (2) verbunden ist, um die Stellung des Sitzes abzutasten;
   die Steuereinheit (2) so ausgelegt ist, um die relative Geschwindigkeit ($v_r$) und die relative Auslenkung ($s_r$) der Person mit einer Schwellwertkurve (A) zu vergleichen, die ebenfalls aufgrund der relativen Stellung des Sitzes ausgewählt wird.

9. System gemäß irgendeinem der Ansprüche 6 bis 8, wobei die Erzeugereinrichtungen, die jene Signale oder Daten liefern, die die relative Geschwindigkeit und die relative Auslenkung der Person angeben, Geschwindigkeits- und Stellungsdetektoren (S1, S2) sind, die im Kraftfahrzeug eingebaut sind.

10. System gemäß irgendeinem der Ansprüche 6 bis 8, **dadurch gekennzeichnet, dass** das System eine Detektoreinrichtung (1) aufweist, die in Betrieb steht, um Signale oder Daten zu liefern, die die Beschleunigung des Kraftfahrzeugs angeben, und dass die Einrichtung zum Erzeugen jener Signale oder Daten, die die relative Geschwindigkeit der Person angeben, von der Steuereinheit (2) gebildet werden, die so voreingerichtet ist, um die relative Geschwindigkeit und die relative Auslenkung der Person im Hinblick auf das Kraftfahrzeug zu berechnen aufgrund von:

   - Signalen, die von der Beschleunigungs-Detektoreinrichtung (1) geliefert werden,
   - mathematischen Modellen der Einheit, die von der Person und dem zugeordneten System, um die Person im Sitz zurückzuhalten, gebildet werden, wobei die mathematischen Modelle im Speicher (4) gespeichert sind und in Übereinstimmung mit dem angelegten oder nicht angelegten Zustand des Sitzgurts ausgewählt werden können, und
   - der Lösung durch die Prozessorstufe (3) einer vorgegebenen Differenzialgleichung, die die Bewegung der Person während eines Aufpralls des Fahrzeugs auf ein Hindernis darstellt.

11. System gemäß irgendeinem der Ansprüche 6 bis 10, **dadurch gekennzeichnet, dass** für einen gegebenen Wert oder Bereich von Werten der Masse (m) der Person im Speicher (4) Daten gespeichert sind, die eine erste Grenzkurve (B) darstellen, die aufgrund eines ersten vorgegebenen mathematischen Modells der Einheit, das von der Person und dem zugeordneten System gebildet wird, das die Person im Sitz zurückhält, sowie aufgrund eines Gleichgewichtszustands zwischen der kinetischen Energie der Person und jener Energie berechnet wird, die vom Rückhaltesystem aufgenommen werden kann.

12. System gemäß Anspruch 11, **dadurch gekennzeichnet, dass** für einen gegebenen Wert oder Bereich von Werten der Masse (m) der Person im Speicher (4) Daten gespeichert sind, die eine zweite Grenzkurve (C) darstellen, die aufgrund des ersten mathematischen Modells sowie eines zweiten vorgegebenen mathematischen Modells angegeben wird, das die Verlangsamung des Kraftfahrzeugs als Funktion der Zeit im Falle eines Aufpralls darstellt, und für eine Vielzahl von simulierten Aufprallvorgängen die Werte $v_r$ und $s_r$, für die das Auslösen des Airbags erforderlich ist, berechnet.

**13.** System gemäß Anspruch 11 oder Anspruch 12, **dadurch gekennzeichnet, dass** für einen gegebenen Wert oder Bereich von Werten der Masse (m) von der Person Daten, die eine dritte Grenzkurve (D) darstellen, im Speicher (4) gespeichert sind, die aufgrund der Differenzialgleichung der relativen Geschwindigkeit ($v_r$) der Person am Beginn eines Aufpralls so berechnet werden, dass in der Zeit, die für das Auslösen und Aufblasen des Airbags (6) notwendig ist, die Person einen vorgegebenen maximalen Weg unter der Annahme zurücklegt, dass im Falle eines Aufpralls die Beschleunigung ($a_v$) des Fahrzeugs einen vorgegebenen konstanten maximalen Wert annimmt.

**14.** System gemäß Anspruch 11 oder Anspruch 12, **dadurch gekennzeichnet, dass** für jeden Wert oder Bereich von Werten der Masse (m) der Person die Prozessorstufe (3) so ausgelegt ist, um als Schwellwertkurve in der $v_r/s_r$-Ebene jene Kurve (A) anzunehmen, die einen Teil der ersten Grenzkurve (B) sowie einen Teil der zweiten Grenzkurve (C) enthält.

**15.** System gemäß Anspruch 13 oder Anspruch 14, **dadurch gekennzeichnet, dass** für jeden Wert oder Bereich von Werten der Masse (m) der Person die Prozessorstufe (3) so ausgelegt ist, um eine Kurve (A) anzunehmen, die weiters einen Teil der dritten Grenzkurve (D) als Schwellwertkurve in der $v_r/s_r$-Ebene enthält.

**16.** System gemäß irgendeinem der Ansprüche 11 bis 15, **dadurch gekennzeichnet, dass** das erste mathematische Modell durch eine lineare Funktion folgender Art dargestellt wird:

$$a_m = \frac{K}{m} + \frac{C}{m}$$

dabei ist:

$a_m$ die absolute Beschleunigung der Person,
m die Masse dieser Person
K eine vorgegebene Funktion von $s_r$, und
C eine vorgegebene Funktion von $v_r$.

**17.** System gemäß Anspruch 16, **dadurch gekennzeichnet, dass** die Funktion K einen Ausdruck folgender Art besitzt:

a) für eine Person mit angelegtem Sitzgurt:

$$K = k_0 \cdot s_r \qquad \text{für } s_r < s_1$$

$$K = k_1 \cdot s_r \qquad \text{für } s_1 < s_r < s_M$$

$$K = k_2 \cdot s_r \qquad \text{für } t > t_M \tag{3}$$

dabei sind:

$k_0$, $k_1$ und $k_2$ Konstante,
$s_1$ jener Wert von $s_r$, der im Voraus experimentell bestimmt wird,
$s_M$ die maximale relative Auslenkung,
t die Zeit vom Beginn eines Aufpralls, und
$t_M$ der Wert jener Zeit, die der maximalen Auslenkung $s_M$ entspricht; und

b) für eine Person ohne angelegten Sitzgurt:

$$K = k_0 \cdot s_r.$$

**18.** System gemäß Anspruch 16 oder Anspruch 17, **dadurch gekennzeichnet, dass** die Funktion C einen Ausdruck folgender Art besitzt:

a) für eine Person mit angelegtem Sitzgurt:

$$C = -c_0 \cdot v_r \qquad \text{für } v_r < 0$$

$$C = 0 \qquad \text{für } v_r > 0$$

und

b) für eine Person ohne angelegten Sitzgurt:

$$C = 0$$

wobei $c_0$ ein experimentell bestimmter, konstanter Wert ist.

**Revendications**

**1.** Système de contrôle de l'activation d'un sac gonflable (6) à bord d'un véhicule motorisé, comprenant des moyens (1, 3, 4 ; S1, S2) pour générer des signaux ou des données, fonctionnant pour proposer des signaux ou des données indiquant la vitesse relative ($V_r$) et le déplacement relatif ($s_r$) de la personne occupant le siège faisant face au sac gonflable (6),

une unité de contrôle électronique (2) comprenant un processeur (3), une mémoire (4) et un dispositif pilote (5) pour contrôler le gonflage du sac gonflable (6) ;

ladite mémoire (4) contenant des données représentatives d'un seuil de vitesse relatif et d'un seuil de déplacement relatif au-delà duquel le sac gonflable (6) doit être gonflé,

ledit processeur (3) étant disposé pour

- acquérir lesdits signaux ou données représentatives de la vitesse relative ($v_r$) et du déplacement relatif ($s_r$) de ladite personne ; et
- proposer un signal de contrôle dudit dispositif pilote (5) pour déterminer l'activation du sac gonflable (6) lorsque ladite vitesse relative ($v_r$) et le déplacement relatif ($s_r$) de la personne en fonction du véhicule motorisé dépasse lesdits seuils ;

**caractérisé en ce que** ladite mémoire (4) contient des données représentatives, dans le plan $v_r$, $s_r$, $v_r$ et $s_r$ étant ladite vitesse relative et le déplacement relatif, d'au moins une courbe de seuil (A) qui est formée des points de seuil, qui varient comme fonction à la fois de ladite vitesse relative ($v_r$) et dudit déplacement relatif ($s_r$), et qui représente la courbe au-delà de laquelle le sac gonflable (6) doit être gonflé, et **en ce que**

ledit processeur (3) est disposé pour déterminer l'activation du sac gonflable (6) lorsque la vitesse relative ($v_r$) et le déplacement relatif ($s_r$) de ladite personne conformément au véhicule motorisé correspondent à un point dans le plan $v_r$, $s_r$ situé au-dessus de ladite courbe de seuil (A).

**2.** Système selon la revendication 1, **caractérisé en ce qu'**il comprend un accéléromètre (1) fonctionnant pour proposer un signal électrique indiquant l'accélération ($a_v$) du véhicule motorisé ;

ladite mémoire (4) contenant en outre des données représentant un premier modèle mathématique prédéterminé de ladite personne et du système associé pour retenir la personne dans le siège ;

ledit processeur (3) étant préalablement disposé pour

- acquérir l'accélération ($a_v$) du véhicule motorisé à partir du signal émis par l'accéléromètre (1) ;
- calculer la vitesse ($v_v$) et le déplacement ($s_v$) du véhicule motorisé sur la base de l'accélération ($a_v$) du véhicule motorisé ;

- intégrer une équation différentielle prédéterminée qui représente la loi du mouvement absolu de ladite personne, pour calculer la vitesse absolue ($x$) et le déplacement ($x$) de ladite personne ;
- calculer la vitesse relative ($v_r$) et le déplacement ($s_r$) de ladite personne en fonction du véhicule motorisé ; et
- proposer un signal au dit pilote (5) pour entraîner l'activation du sac gonflable (6) lorsque les valeurs calculées ($v_r$, $s_r$) de la vitesse relative et du déplacement de la personne en fonction du véhicule motorisé correspondent à un point situé dans le plan $v_r$, $s_r$ au-dessus de ladite courbe limite (A).

3. Système selon la revendication 2, **caractérisé en ce que** les données sont stockées dans ladite mémoire (4) représentative d'une courbe limite prédéterminée (A), l'intersection entre une première courbe (B) calculée sur la base dudit premier modèle mathématique et sur la base de l'équilibre entre l'énergie cinétique de ladite personne et l'énergie qui peut être absorbée par le système associé de retenue de la personne au siège, et une deuxième courbe (C) identifiée sur la base dudit premier modèle mathématique et d'un second modèle mathématique prédéterminé qui représente la décélération du véhicule comme une fonction temporelle en cas d'impact, et calculant pour une pluralité d'impacts simulés les valeurs de $v_r$ et $s_r$ auxquelles l'activation du sac gonflable (6) est nécessaire.

4. Système selon la revendication 2 ou 3, **caractérisé en ce que** ledit premier modèle mathématique est représenté par une fonction linéaire du type

$$a_m = 0 \text{ pour } s_r \text{ inférieur à } s_1$$

et

$$a_m = k(s_r\text{-}s_1) \text{ pour } s_r \text{ supérieur à } s_1$$

dans laquelle $a_m$ représente l'accélération absolue de ladite personne, $s_r$ le déplacement relatif de ladite personne en fonction du véhicule, $s_1$ la valeur de $s_r$ déterminée au préalable à titre d'expérience et k une constante déterminée à titre d'expérience.

5. Système selon la revendication 4, **caractérisé en ce que** ledit second modèle mathématique est représenté par une fonction du type

$$a_v = A (1\text{-}\cos 2\pi t/d)/2 \ (2)$$

dans laquelle $a_v$ représente l'accélération du véhicule, t le temps, A l'accélération maximum du véhicule et d la durée de l'impact.

6. Système selon la revendication 1, comprenant en outre un capteur (S4) pour détecter la masse (m) de la personne occupant ledit siège ;

   ladite mémoire (4) contenant des données représentatives d'une pluralité de courbes de seuil (A), chacune d'elles représentant, dans le plan $v_r$, $s_r$, le seuil au-delà duquel le sac gonflable (6) doit être gonflé, $v_r$ et $s_r$ étant la vitesse relative et le déplacement de la personne occupant ledit siège ; chaque courbe de seuil (A) correspondant à une valeur associée ou à une plage de valeurs de la masse (m) de ladite personne ;

   les processeurs (3) étant disposés pour

   sélectionner à partir de ladite mémoire (4) la courbe de seuil (A) qui correspond à la masse (m) de la personne occupant le siège, et

   proposer un signal au dit dispositif pilote (5) pour déterminer l'activation du sac gonflable (6) lorsque lesdites données indiquant la vitesse relative ($v_r$) et le déplacement relatif ($s_r$) de la personne en fonction du véhicule motorisé correspondent à un point situé dans le plan $v_r$, $s_r$ au-dessus de la courbe de seuil (A) sélectionnée.

7. Système selon la revendication 6, **caractérisé en ce qu'**il comprend, en outre, un capteur (S3) pour détecter si une ceinture de sécurité associée au siège est connectée, **en ce que** ladite mémoire (4) contient les données représentatives de différentes courbes de seuil (A) pour la condition d'attachement et de détachement de ladite ceinture de sécurité, et **en ce que** le processeur (3) est disposé pour sélectionner, à partir de ladite mémoire (4), la courbe de seuil (A) qui correspond à la masse (m) de la personne occupant le siège et pour détecter si la ceinture de sécurité associée est attachée ou non.

**8.** Système selon la revendication 6 ou 7 pour un véhicule motorisé dans lequel la position dudit siège par rapport au sac gonflable (6) est ajustable,

**caractérisé en ce qu'**il comprend, en outre,

un détecteur (S5) connecté à ladite unité de contrôle (2) pour détecter la position du siège ;

l'unité de contrôle (2) étant disposée pour comparer la vitesse relative ($v_r$) et le déplacement relatif ($s_r$) de ladite personne avec une courbe de seuil (A) qui est également sélectionnée en fonction de la position relative dudit siège.

**9.** Système selon l'une quelconque des revendications 6 à 8, dans lequel le générateur qui propose les signaux ou les données indiquant la vitesse relative et le déplacement relatif de la personne est un dispositif de détection de la vitesse et du déplacement (S1, S2) installé dans le véhicule motorisé.

**10.** Système selon l'une quelconque des revendications 6 à 8, **caractérisé en ce qu'**il comprend un détecteur (1) fonctionnant pour proposer des signaux ou des données indiquant l'accélération du véhicule motorisé et **en ce que** les moyens de génération des signaux ou des données indiquant la vitesse relative de la personne sont composés de ladite unité de contrôle (2) qui est préalablement disposée pour calculer la vitesse relative et le déplacement relatif de la personne en fonction du véhicule motorisé, sur la base

- des signaux proposés par le détecteur d'accélération (1),
- des modèles mathématiques de l'unité formée par la personne et le système associé de retenue de la personne dans le siège, lesdits modèles mathématiques étant stockés dans ladite mémoire (4) et pouvant être sélectionnés selon la condition d'attachement ou de détachement de la ceinture de sécurité, et
- de la résolution, par ledit processeur (3), d'une équation différentielle prédéterminée qui représente le mouvement de la personne lors de l'impact du véhicule contre un obstacle.

**11.** Système selon l'une quelconque des revendications 6 à 10, **caractérisé en ce que**, pour une valeur ou une plage de valeurs données de la masse (m) de ladite personne, sont stockées dans la mémoire (4) des données représentatives d'une première courbe limite (B) calculée en fonction d'un premier modèle mathématique prédéterminé de l'unité formée par la personne et le système associé de retenue de la personne dans le siège et en fonction d'une condition d'équilibre entre l'énergie cinétique de ladite personne et l'énergie qui peut être absorbée par ledit système de retenue.

**12.** Système selon la revendication 11, **caractérisé en ce que**, pour une valeur ou une plage de valeurs données de la masse (m) de la personne, sont stockées dans la mémoire (4) des données représentatives d'une deuxième courbe limite (C) identifiée en fonction du premier modèle mathématique et d'un second modèle mathématique prédéterminé qui représente la décélération du véhicule comme une fonction temporelle en cas d'impact, et en calculant, pour une pluralité d'impacts simulés, les valeurs $v_r$ et $s_r$ pour lesquelles l'activation du sac gonflable est nécessaire.

**13.** Système selon les revendications 11 ou 12, **caractérisé en ce que**, pour une valeur ou une plage de valeurs données de la masse (m) de ladite personne, des données représentatives d'une troisième courbe limite (D) sont stockées dans la mémoire (4), déterminées en calculant, en fonction de ladite équation différentielle, la vitesse relative ($v_r$) de la personne au début d'un impact, de sorte que, dans le temps nécessaire pour activer et gonfler le sac gonflable (6), ladite personne se déplace sur une distance possible maximum prédéterminée en supposant que, dans la course de l'impact, l'accélération ($a_v$) du véhicule assume une valeur maximum constante prédéterminée.

**14.** Système selon les revendications 11 ou 12, **caractérisé en ce que**, pour chaque valeur ou plage de valeurs de la masse (m) de la personne, le processeur (3) est disposé de sorte qu'il assume comme courbe de seuil dans le plan $v_r$, $s_r$ la courbe (A) comprenant une partie de ladite première courbe limite (B) et une partie de ladite deuxième courbe limite (C).

**15.** Système selon les revendications 13 ou 14, **caractérisé en ce que**, pour chaque valeur ou plage de valeurs de la masse (m) de la personne, le processeur (3) est disposé pour assumer une courbe (A) comprenant en outre une partie de ladite troisième courbe limite (D) comme courbe de seuil dans le plan $v_r$, $s_r$.

**16.** Système selon l'une quelconque des revendications 11 à 15, **caractérisé en ce que** le premier modèle mathématique est représenté par une fonction linéaire du type

$$a_m = \frac{K}{m} + \frac{C}{m}$$

dans laquelle
$a_m$ est l'accélération absolue de la personne,
m est la masse de la personne,
K est une fonction prédéterminée de $s_r$, et
C est une fonction prédéterminée de $v_r$.

**17.** Système selon la revendication 16, **caractérisé en ce que** la fonction K a une expression du type :

a) pour une personne dont la ceinture de sécurité est attachée :

$$K = k_0 * s_r \text{ pour } s_r < s_1$$

$$K = k_1 * s_r \text{ pour } s_1 < s_r < s_M$$

$$K = k_2 * s_r \text{ pour } t > t_M$$

$k_0$, $k_1$ et $k_2$ étant des constantes,
$s_1$ étant la valeur de $s_r$ déterminée préalablement à titre d'expérience,
$s_M$ étant le déplacement relatif maximum,
t étant le temps à partir du début de l'impact, et
$t_M$ étant la valeur de temps correspondant au déplacement relatif maximum $s_M$ ; et
b) pour une personne dont la ceinture de sécurité n'est pas attachée :

$$K = k_0 * s_r.$$

**18.** Système selon les revendications 16 ou 17, **caractérisé en ce que** la fonction C a une expression du type :

a) pour une personne dont la ceinture de sécurité est attachée :

$$C = -c_0 * v_r \text{ pour } v_r < 0$$

$$C = 0 \qquad \text{pour } v_r > 0,$$

et
b) pour une personne dont la ceinture de sécurité n'est pas attachée :

$$C = 0$$

dans laquelle $c_0$ est une valeur constante déterminée à titre d'expérience.

**17**

FIG. 1

FIG. 2

FIG. 3

FIG. 4

## FIG. 5

## FIG. 6

# FIG. 7

EP 0 818 357 B1

FIG. 8

FIG. 9

EP 0 818 357 B1

FIG. 11

SEAT BELT NOT FASTENED

FIG. 10

SEAT BELT FASTENED

FIG. 12

SEAT BELT FASTENED

$C_0$

$C$

$0$

$V_r$

FIG. 13

SEAT BELT _NOT_ FASTENED

$C$

$0$

$V_r$

EP 0 818 357 B1